# EUROPEAN PATENT APPLICATION

(11) **EP 3 386 078 A1**
(43) Date of publication of application: **10.10.2018**
(21) Application number: 17766112.1
(22) Date of filing: 03.02.2017
(51) Int. Cl.: H02K 11/40, F24F 1/00, H02K 5/16

(54) **INDOOR UNIT, AIR CONDITIONER, AND METHOD FOR MANUFACTURING INDOOR UNIT**

(30) Priority: 18.03.2016 JP 2016055309
(71) Applicant: Mitsubishi Heavy Industries Thermal Systems, Ltd., Tokyo 108-8215 (JP)
(72) Inventor: SHINODA Hisanobu, Tokyo 108-8215 (JP); KANIE Tetsuo, Tokyo 108-8215 (JP); NII Masahiro, Tokyo 108-8215 (JP)
(74) Representative: Cabinet Beau de Loménie
(86) International application number: PCT/JP2017/003970
(87) International publication number: WO 2017/159104

(57) **Abstract**

An indoor unit (1) is provided with: a grounded housing (1A); a fan motor (10) mounted to the housing (1A); and a capacitance forming member (30) formed from a conductor material, the capacitance forming member (30) having one end which is mounted to the housing (1A) and having the other end having a facing surface which faces a surface of a shaft (11) with a distance located therebetween, the shaft (11) extending from the body of the fan motor (10).

## Description

### Technical Field

The present invention relates to an indoor unit of an air conditioner, an air conditioner provided with the indoor unit, and a method for manufacturing an indoor unit. Priority is claimed on Japanese Patent Application No. 2016-055309 filed on March 18, 2016, the content of which is incorporated herein by reference.

### Background Art

In a fan motor for a recent air conditioner, in general, an inverter driving method of driving the fan motor with a pulse width modulation (PWM) method by using an inverter is used. In a case of using the inverter driving method, it is known that common mode noise according to switching control of the inverter propagates in the interior of the fan motor and fluctuates a neutral point potential of a motor winding. Then, a potential difference (hereinafter also stated as a "shaft voltage") is generated between an outer ring (a bracket) and an inner ring (a shaft) of a bearing for a motor rotary shaft.

If the shaft voltage reaches a dielectric breakdown voltage of an oil film in the interior of the bearing, a minute current flows in the interior of the bearing, and thus electric corrosion occurs in the interior of the bearing. If the electric corrosion progresses, there is a case where a wavy wear phenomenon occurs in a bearing inner ring, a bearing outer ring, or a bearing ball provided between the bearing inner ring and the bearing outer ring, thereby leading to abnormal noise, and it becomes one of factors of a problem in the fan motor.

As a method of preventing the electric corrosion as described above, that is, as a method of reducing the shaft voltage, various countermeasures have been proposed. For example, a method of disposing a bearing inner ring and a bearing outer ring in a contact (conduction) state through a brush or the like having electrical conductivity is known.

Further, a method of reducing a shaft voltage by adding separate capacitance between a shaft and a bearing outer ring is also disclosed (refer to PTL 1).

In addition, a method of preventing dielectric breakdown of an oil film in the interior of a bearing by adopting a ceramic ball bearing is also known.

### Citation List

### Patent Literature

[PTL 1] Japanese Unexamined Patent Application Publication No. 2012-228137

### Summary of Invention

### Technical Problem

However, in a case of causing the conduction through the brush described above, generation of abrasion powder of the brush, an installation space for the brush, a life of the brush, or the like becomes problematic. Further, in a case of using the ceramic bearing ball between the inner and outer rings, there is a problem in that a cost is greatly increased.

The present invention has been made in order to solve the above problems, and an object thereof is to provide an indoor unit, an air conditioner, and a method for manufacturing an indoor unit, in which electric corrosion of a bearing can be suppressed at low cost.

### Solution to Problem

According to an aspect of the present invention, there is provided an indoor unit including: a grounded housing; a fan motor mounted on the housing; and a capacitance forming member which is formed of a conductor material and has one end mounted on the housing and the other end having a facing surface which faces a surface of a shaft member with a distance interposed therebetween, the shaft member extending from a main body of the fan motor.

Further, according to an aspect of the present invention, the facing surface of the capacitance forming member is formed such that capacitance between the housing and a bracket of the fan motor coincides with capacitance between the housing and the shaft member of the fan motor.

Further, according to an aspect of the present invention, the facing surface of the capacitance forming member is formed such that a ratio of capacitance between a bracket and a negative direct-current line to capacitance between a winding neutral point and the bracket in the fan motor coincides with a ratio of capacitance between the shaft member and the negative direct-current line to capacitance between the winding neutral point and the shaft member.

Further, according to an aspect of the present invention, the facing surface of the capacitance forming member and the shaft member of the fan motor are formed concentrically to be centered on a rotational axis.

Further, according to an aspect of the present invention, a dielectric material is disposed between the facing surface of the capacitance forming member and the surface of the shaft member.

Further, according to an aspect of the present invention, the dielectric material is formed so as to surround the shaft member in a circumferential direction.

Further, according to an aspect of the present invention, the shaft member includes a shaft of the fan motor, a shaft extension member disposed so as to further extend from a tip of the shaft in an extending direction of the shaft, and a shaft connection member connecting the shaft and the shaft extension member.

Further, according to an aspect of the present invention, the shaft and the shaft extension member are capacitively coupled to each other through the shaft connection member.

Further, according to another aspect of the present invention, there is provided an air conditioner including: the indoor unit described above; and an outdoor unit.

Further, according to still another aspect of the present invention, there is provided a method for manufacturing an indoor unit including: a step of mounting a fan motor on a grounded housing of the indoor unit; and a step of mounting one end of a capacitance forming member formed of a conductor material on the housing and disposing a facing surface provided at the other end so as to face a surface of a shaft member with a distance interposed therebetween, the shaft member extending from a main body of the fan motor.

### Advantageous Effects of Invention

According to the indoor unit, the air conditioner, and the method for manufacturing an indoor unit described above, electric corrosion of a bearing can be suppressed at low cost.

### Brief Description of Drawings

Fig. 1 is a first diagram showing an internal configuration of an indoor unit according to a first embodiment.
Fig. 2 is a second diagram showing the internal configuration of the indoor unit according to the first embodiment.
Fig. 3 is a third diagram showing the internal configuration of the indoor unit according to the first embodiment.
Fig. 4 is a diagram showing an internal configuration of a fan motor according to the first embodiment.
Fig. 5 is a diagram showing an equivalent circuit regarding common mode noise according to switching control of an inverter of the interior and the periphery of the fan motor according to the first embodiment.
Fig. 6 is a diagram showing stray capacitance which is generated in the interior of the fan motor according to the first embodiment.
Fig. 7 is a diagram showing stray capacitance which is generated between the fan motor according to the first embodiment and a housing of the indoor unit.
Fig. 8 is a first diagram showing an internal configuration of an indoor unit according to a second embodiment.
Fig. 9 is a second diagram showing the internal configuration of the indoor unit according to the second embodiment.
Fig. 10 is a third diagram showing the internal configuration of the indoor unit according to the second embodiment.

### Description of Embodiments

### <First Embodiment>

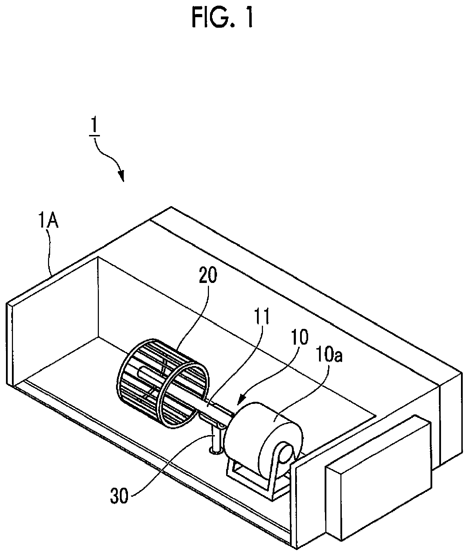

Hereinafter, an indoor unit according to a first embodiment will be described with reference to Figs. 1 to 7.

### (Internal Configuration of Indoor Unit)

Figs. 1 to 3 are first to third diagrams showing an internal configuration of the indoor unit according to the first embodiment.

Fig. 1 shows the overall configuration in the interior of an indoor unit 1.

The indoor unit 1 shown in Fig. 1 is an indoor unit which is installed in the interior of a room, among instruments configuring an air conditioner. Here, the air conditioner is composed of an outdoor unit which is installed outside the room, and the indoor unit 1 which is installed in the interior of the room. As shown in Fig. 1, the indoor unit 1 is provided with a housing 1A, a fan motor 10, a fan 20, and a capacitance forming member 30.

The housing 1A is a housing of the indoor unit 1, which is made of a member having electrical conductivity. The housing 1A is electrically connected to the ground, and the entire housing 1A has a ground potential.

The fan motor 10 has a fan motor main body 10a and a shaft 11 (a shaft member) which extends from the fan motor main body 10a. The fan motor 10 is, for example, a DC brushless motor and rotationally drives the shaft 11 according to a control signal based on a PWM method. The control signal is input from an inverter circuit (not shown).

The fan 20 is connected to the fan motor 10 through the shaft 11, thereby rotating according to the rotation of the shaft 11. The fan 20 rotates, whereby air is blown from the indoor unit 1 into the room.

The capacitance forming member 30 is formed of a conductor material, and one end thereof is mounted on the inner wall of the housing 1A. The capacitance forming member 30 is electrically connected to the housing 1A, thereby having the same potential as the housing 1A (that is, the ground potential).

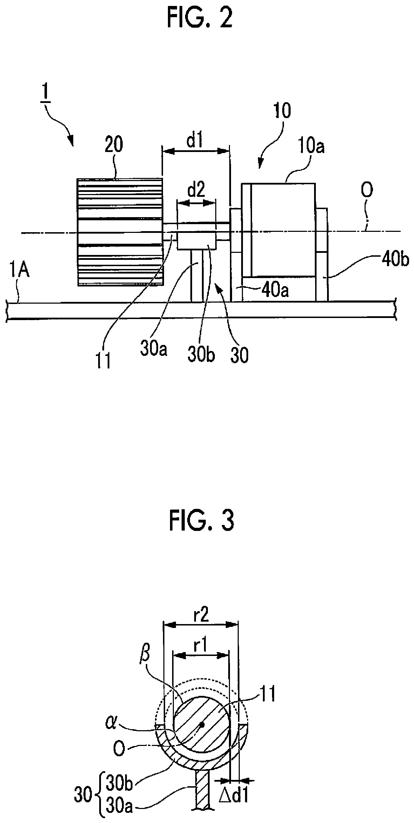

Fig. 2 shows the structures and disposition of the fan motor 10, the fan 20, and the capacitance forming member 30 in the interior of the indoor unit 1.

As shown in Fig. 2, the fan motor main body 10a is fixedly installed on the inner wall of the housing 1A by fixing members 40a and 40b. Further, the shaft 11 extends from the fan motor main body 10a in a direction along the inner surface of the housing 1A, and the fan 20 is mounted on the tip of the shaft 11. The control signal described above is input to the fan motor main body 10a, whereby the shaft 11 and the fan 20 rotate around a rotational axis O.

Further, as shown in Fig. 2, the capacitance forming member 30 is fixedly installed on the housing 1A in the space between the fan motor main body 10a and the fan 20. The capacitance forming member 30 has a columnar member 30a formed so as to extend from a base end (the side fixed to the housing 1A) to the shaft 11 of the fan motor 10, and a facing member 30b which is provided at the tip of the columnar member 30a and has a surface which faces the side surface of the shaft 11.

Next, the structure of the capacitance forming member 30 and the positional relationship between the shaft 11 and the capacitance forming member 30 will be described in more detail with reference to Fig. 3.

Fig. 3 shows the sectional structures of the shaft 11 and the capacitance forming member 30 in a plane direction perpendicular to the rotational axis O.

As shown in Fig. 3, the shaft 11 is formed in a columnar shape, and the cross section thereof is formed in a circular shape centered on the rotational axis O.

Further, the facing member 30b of the capacitance forming member 30 is formed in a semicircular shape centered on the rotational axis O and has an arc-shaped facing surface α which faces an arc-shaped side surface β of the shaft 11 with a distance interposed therebetween.

In this embodiment, the distance (a distance d1 shown in Fig. 2) between the fan motor main body 10a and the fan 20 is about 50 mm. For this reason, the length (a distance d2 shown in Fig. 2) of the facing member 30b in a direction of the rotational axis O is set to be a length that falls within the distance (the distance d1), and is, for example, about 30 mm.

Further, in Fig. 3, an outer diameter r1 of the shaft 11 is about 13 mm, and an inner diameter r2 of the facing member 30b is about 15 mm. Therefore, a distance Δd1 between the side surface β and the facing surface α is about 1 mm.

Here, the space between the side surface β and the facing surface α is filled with air. Therefore, with the configuration described above, capacitance of about 5.4 pF is formed between the shaft 11 and the capacitance forming member 30.

Each of the dimensions described above is merely an example, and in another embodiment, the dimensions can be appropriately changed according to the internal configuration or the like of the indoor unit 1.

### (Internal Configuration of Fan Motor)

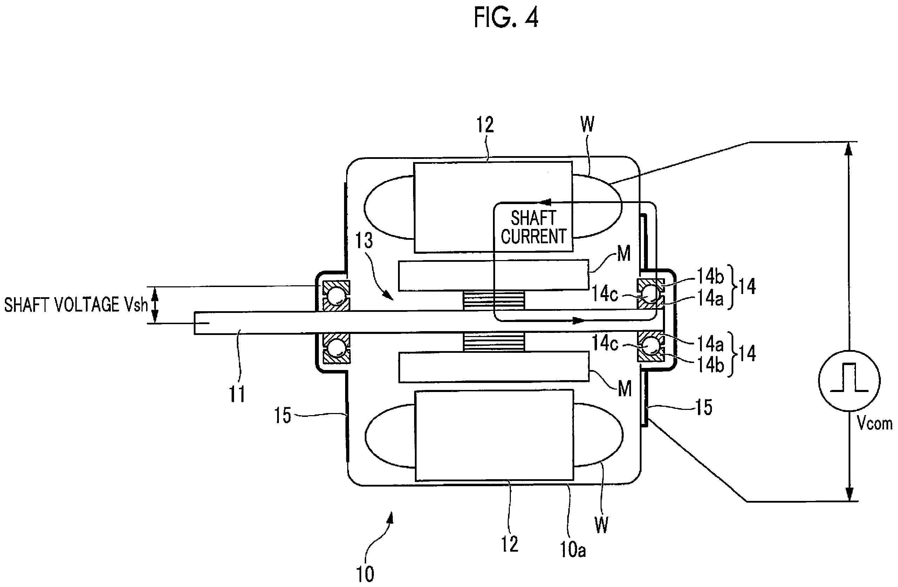

Fig. 4 is a diagram showing the internal configuration of the fan motor according to the first embodiment.

In Fig. 4, the fan motor 10 is provided with a stator 12 around which a winding W is wound, and a rotor 13 having a permanent magnet M mounted along the inner peripheral surface of the stator 12. In the fan motor 10, the rotor 13 is rotated by a rotating magnetic field which is generated according to a switching state by PWM control of a switching element such as a power transistor.

Further, the fan motor 10 is provided with two bearings 14 which rotatably support the shaft 11 on the back side and the front side in an extending direction of the shaft 11 in the interior of the fan motor main body 10a. Each of the two bearings 14 has a bearing inner ring 14a, a bearing outer ring 14b, and a bearing ball 14c.

The bearing inner ring 14a is fixed to the shaft 11 and rotates integrally with the rotor 13 and the shaft 11. The bearing inner ring 14a has the same potential as the shaft 11.

The bearing outer ring 14b is fixedly installed on the outer periphery of the bearing inner ring 14a.

The bearing ball 14c is provided between the bearing inner ring 14a and the bearing outer ring 14b.

Further, the fan motor 10 is provided with two brackets 15 which are formed so as to cover the two bearings 14, respectively, and form the exterior package of the fan motor main body 10a. Each of the two brackets 15 is made of a conductor material and is in contact with each of the two bearing outer rings 14b to have the same potential. Further, the two brackets 15 are also electrically connected to each other to have the same potential. However, the two brackets 15 are not electrically connected to the housing 1A and not grounded.

A shaft voltage Vsh is generated between the bearing outer ring 14b (the bracket 15) and the bearing inner ring 14a (the shaft 11) according to the drive of the fan motor 10 (refer to Fig. 4). If the shaft voltage Vsh increases, electric corrosion can occur in the bearing ball 14c or the like.

### (Equivalent Circuit in Interior and Periphery of Fan Motor)

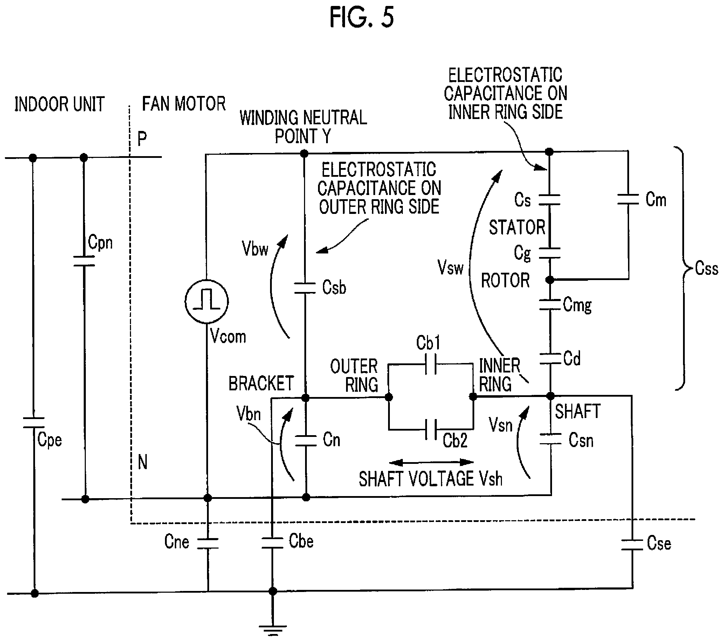

Fig. 5 is a diagram showing an equivalent circuit regarding common mode noise according to switching control of an inverter of the interior and the periphery of the fan motor according to the first embodiment.

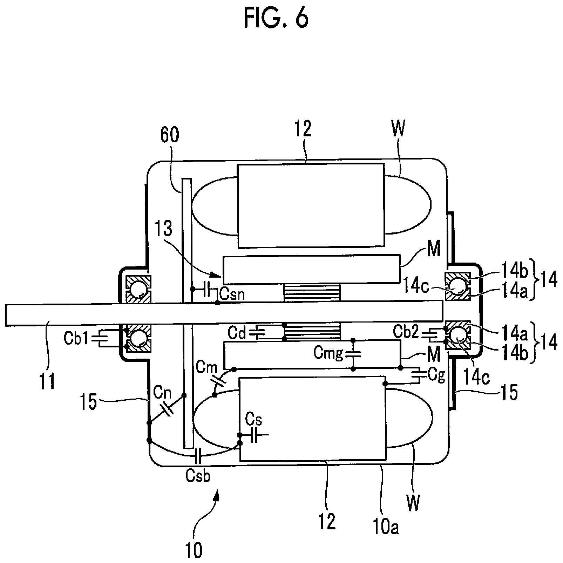

Further, Fig. 6 is a diagram showing stray capacitance which is generated in the interior of the fan motor according to the first embodiment.

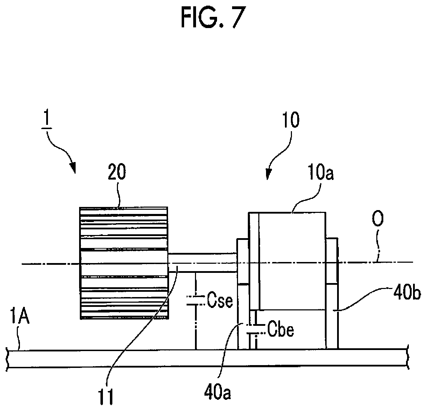

Further, Fig. 7 is a diagram showing stray capacitance which is generated between the fan motor according to the first embodiment and the housing of the indoor unit.

The circuit shown in Fig. 5 is an equivalent circuit with respect to the interior and the periphery of the fan motor 10 in a case where the fan motor 10 is fixedly incorporated in the housing 1A of the indoor unit 1. Further, as shown in Fig. 6, the fan motor main body 10a has, in the interior thereof, a substrate 60 on which an inverter circuit is mounted.

Hereinafter, the shaft voltage Vsh which is generated in the fan motor 10 of this embodiment will be described with reference to Figs. 5 to 7.

In Fig. 5, "Vcom" represents a generation source of the common mode noise. Further, "P" represents a positive direct-current line of the inverter circuit mounted on the substrate 60, and "N" represents a negative direct-current line of the inverter circuit mounted on the substrate 60. The fan motor 10 converts a direct-current voltage which is generated between the positive direct-current line P and the negative direct-current line N into an alternating current, based on a control signal, and rotationally drive the shaft 11 and the fan 20. According to "Vcom" shown in Fig. 5, the common mode noise is generated between the reference potential (the negative direct-current line N) in the fan motor 10 and a winding neutral point Y.

In Fig. 5, "Cne" represents capacitance (a Y capacitor) provided between the negative direct-current line N and the housing 1A (the ground), and "Cpe" represents capacitance (a Y capacitor) between the positive direct-current line P and the housing 1A (the ground). Further, "Cpn" represents capacitance (a smoothing capacitor) provided between the positive direct-current line P and the negative direct-current line N.

In Figs. 5 and 6, "Cs" represents stray capacitance which is generated between the winding W and the stator 12, and "Cm" represents stray capacitance which is generated between the winding W and the permanent magnet M. Further, "Cg" represents stray capacitance which is generated between the stator 12 and the rotor 13, and "Cmg" represents stray capacitance which is generated in the permanent magnet M. Further, "Cd" represents stray capacitance which is generated in the rotor 13. Net stray capacitance which is generated between the winding neutral point Y and the shaft 11 through the stray capacitances Cs, Cm, Cg, Cd, and Cmg is represented by "Css".

Further, "Csn" represents stray capacitance which is generated between the shaft 11 and the negative direct-current line N. Further, "Cb1" and "Cb2" represent two bearing stray capacitances (stray capacitance which is generated between the bearing inner ring 14a and the bearing outer ring 14b in the bearing 14), and "Csb" represents stray capacitance which is generated between the winding W and the bracket 15. Further, "Cn" represents stray capacitance which is generated between the bracket 15 and the negative direct-current line N.

In Figs. 5 and 7, "Cbe" represents capacitance which is generated between the bracket 15 and the housing 1A (the ground), and "Cse" represents capacitance which is generated between the shaft 11 and the housing 1A (the ground).

### (Operation and Effects)

Hereinafter, the operation and effects of the indoor unit 1 according to the first embodiment will be described.

In Fig. 5, a potential difference which is generated between the negative direct-current line N and the bracket 15 when a predetermined noise voltage is applied from the noise generation source Vcom is set to be "Vbn", and a potential difference which is generated between the bracket 15 and the winding neutral point Y is set to be "Vbw". Further, a potential difference which is generated between the negative direct-current line N and the shaft 11 when a predetermined noise voltage is applied from the noise generation source Vcom is set to be "Vsn", and a potential difference which is generated between the shaft 11 and the winding neutral point Y is set to be "Vsw" (refer to Fig. 5).

Focusing on only the portion corresponding to the fan motor 10 in the equivalent circuit shown in Fig. 5, in a case where the ratio of the potential difference Vbw to the potential difference Vbn coincides with the ratio of the potential difference Vsw to the potential difference Vsn, it can be seen that the shaft voltage Vsh becomes zero. Therefore, in consideration of such an equivalent circuit, the fan motor 10 is configured such that the ratio of the potential difference Vbw to the potential difference Vbn approximately coincides with the ratio of the potential difference Vsw to the potential difference Vsn. In other words, in the internal structure of the fan motor main body 10a, a configuration is made such that the ratio (Csb/Cn) of the capacitance between the winding neutral point and the bracket to the capacitance between the bracket and the negative direct-current line approximately coincides with the ratio (Css/Csn) of the capacitance between the winding neutral point and the shaft to the capacitance between the shaft and the negative direct-current line.

However, if the fan motor 10 is mounted on the housing 1A, the stray capacitance Cbe and the stray capacitance Cse are further generated between the bracket 15 and the housing 1A and between the shaft 11 and the housing 1A, respectively.

Here, as shown in Fig. 7, the brackets 15 and the housing 1A are fastened to each other with the fixing members 40a and 40b each made of a conductor material. Then, since the distance between each of the brackets 15 and each of the fixing members 40a and 40b having the same potential as that of the housing 1A is short, the stray capacitance Cbe becomes relatively large. On the other hand, since the distance between the shaft 11 and the housing 1A is relatively large, the stray capacitance Cse becomes smaller than the stray capacitance Cbe. For this reason, the shaft voltage Vsh can be generated due to the difference between the stray capacitance Cse which is generated by incorporating the fan motor 10 in the housing 1A and the stray capacitance Cbe.

Therefore, the indoor unit 1 according to the first embodiment is made to be an aspect in which it is provided with the capacitance forming member 30 which is formed of a conductor material and has one end mounted on the housing 1A of the indoor unit 1 and the other end having the facing surface α which faces the surface (the side surface β) of the shaft 11 extending from the fan motor main body 10a, with a distance interposed therebetween (refer to Figs. 1 to 3).

In this way, the stray capacitance Cse between the shaft 11 and the housing 1A becomes large, and therefore, it can be balanced with the stray capacitance Cbe, and as a result, it is possible to reduce the shaft voltage Vsh.

That is, according to the indoor unit 1 of the first embodiment, it is possible to reduce the shaft voltage Vsh merely by mounting the capacitance forming member 30 made of a conductor material without using a conductive brush, a ceramic ball, or the like. Therefore, it is possible to suppress the electric corrosion of the bearing at low cost.

Further, according to the indoor unit 1 of the first embodiment, the facing surface α of the capacitance forming member 30 is formed such that the stray capacitance Cbe between the housing 1A of the indoor unit 1 and the bracket 15 of the fan motor 10 coincides with the stray capacitance Cse between the housing 1A and the shaft 11 of the fan motor 10.

In this way, in a case where the generation of the shaft voltage Vsh is suppressed in the fan motor 10 alone, even after the fan motor 10 is mounted on the housing 1A, it is possible to suppress the generation of the shaft voltage Vsh.

In another embodiment, the stray capacitance Cbe and the stray capacitance Cse do not need to necessarily coincide with each other. The capacitance forming member 30 is provided, whereby it is possible to achieve the effect of reducing the shaft voltage Vsh as long as at least the difference between the stray capacitance Cbe and the stray capacitance Cse is reduced.

Further, in another embodiment, the fan motor 10 may be a fan motor in which the generation of the shaft voltage Vsh is not suppressed in the fan motor alone. That is, a fan motor may be used in which in the internal structure of the fan motor main body 10a, the ratio of the potential difference Vbw (Fig. 5) to the potential difference Vbn (Fig. 5) does not coincide with the ratio of the potential difference Vsw (Fig. 5) to the potential difference Vsn (Fig. 5).

In this case, the facing surface α of the capacitance forming member 30 can be formed such that the ratio (Csb/Cn) of the capacitance between the bracket and the negative direct-current line to the capacitance between the winding neutral point and the bracket in the fan motor 10 coincides with the ratio (Css/Csn) of the capacitance between the shaft and the negative direct-current line to the capacitance between the winding neutral point and the shaft.

Further, the facing surface α of the facing member 30b (the capacitance forming member 30) according to the first embodiment and the columnar shaft 11 are formed concentrically to be centered on the rotational axis O (refer to Fig. 3).

In this way, the distance Δd1 (Fig. 3) between the side surface β of the shaft 11 and the facing surface α can be made constant, and thus the stray capacitance between the shaft 11 and the housing 1A can be efficiently increased.

Further, the facing surface α of the facing member 30b according to the first embodiment is formed in a semicircular shape (refer to Fig. 3).

In this way, the shaft 11 and the capacitance forming member 30 do not interfere with each other when performing the work of mounting the fan motor 10, and therefore, the burden of the mounting work can be reduced.

In another embodiment, the facing surface α may not be semicircular. For example, the facing surface α may be formed in a circular shape surrounding the entirety in circumferential direction of the side surface β of the shaft 11.

In this way, it is possible to further increase the stray capacitance between the shaft 11 and the housing 1A.

Further, in this embodiment, the distance Δd1 between the side surface β of the shaft 11 and the facing surface α is, for example, about 1 mm. However, it is preferable that the distance Δd1 is determined in consideration of the degree of oscillation at the time of the rotational drive of the shaft 11. That is, according to the degree of oscillation according to the rotational drive of the shaft 11, it is conceivable that the shaft 11 and the capacitance forming member 30 come into contact with each other. Therefore, it is preferable that the distance Δd1 is made as small as possible up to the distance in which the shaft 11 does not come into contact with the capacitance forming member 30 during the rotational drive.

### <Second Embodiment>

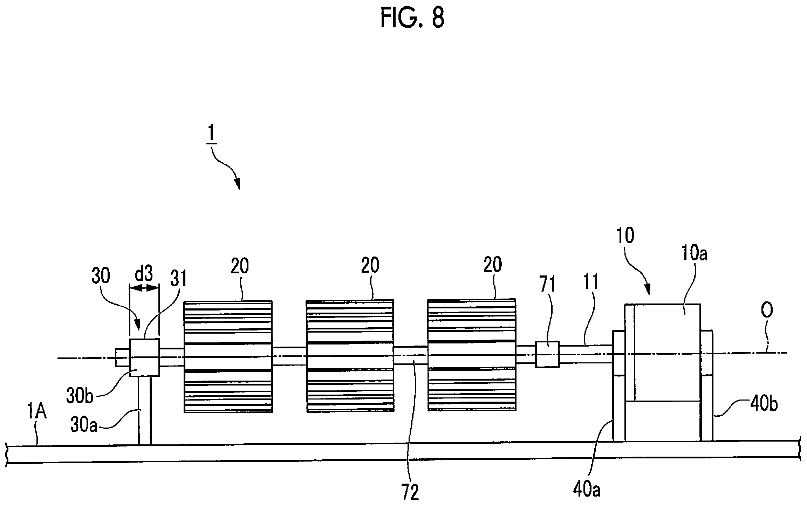

Next, an indoor unit according to a second embodiment will be described with reference to Figs. 8 to 10.

### (Internal Configuration of Indoor Unit)

Figs. 8 to 10 are first to third diagrams showing the internal configuration of the indoor unit according to the second embodiment.

Fig. 8 shows the structures and disposition of the fan motor 10, the fan 20, and the capacitance forming member 30 in the interior of the indoor unit 1.

As shown in Fig. 8, the indoor unit 1 according to the second embodiment has a large capacity (a large size) compared to the indoor unit 1 according to the first embodiment and is provided with a plurality of (three) fans 20. The fan motor 10 according to the second embodiment rotates all the fans 20 around the same rotational axis O by rotationally driving the shaft 11.

The indoor unit 1 according to the second embodiment is further provided with a shaft connection member 71 and a shaft extension member 72 (a shaft member), in addition to the configuration of the first embodiment.

The shaft connection member 71 is a member which connects the tip of the shaft 11 and the shaft extension member 72. In this embodiment, the shaft connection member 71 is formed of a dielectric material.

The shaft extension member 72 is a member which is disposed to extend in the extending direction of the shaft 11 through the shaft connection member 71, and supports the plurality of fans 20. Further, the shaft extension member 72 rotates integrally with the shaft 11, thereby rotating the plurality of fans 20 around the same rotational axis O. The shaft extension member 72 is made of a conductor material.

Further, as shown in Fig. 8, the capacitance forming member 30 according to the second embodiment is fixedly installed on the housing 1A at the tip of the shaft extension member 72 extending while supporting the plurality of fans 20. The capacitance forming member 30 has the columnar member 30a formed so as to extend from the base end (the side fixed to the housing 1A) to the shaft extension member 72, and the facing member 30b provided at the tip of the columnar member 30a and having a surface which faces the side surface of the shaft extension member 72. Further, the capacitance forming member 30 has a bearing member 31 serving as a bearing for the shaft extension member 72. The columnar member 30a and the facing member 30b of the capacitance forming member 30 are each made of a conductor material, and the bearing member 31 is made of a dielectric material.

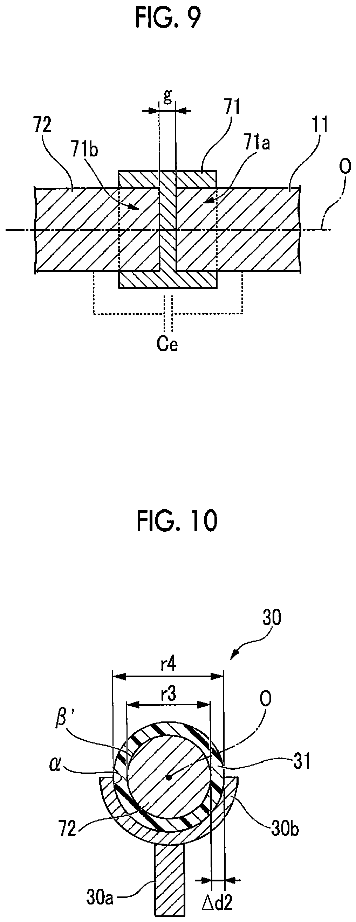

Fig. 9 shows the sectional structures of the shaft 11, the shaft connection member 71, and the shaft extension member 72.

As shown in Fig. 9, the shaft connection member 71 is formed so as to have two fitting openings 71a and 71b. The tip of the shaft 11 is fitted into the fitting opening 71a on one side. Further, the tip of the shaft extension member 72 is fitted into the fitting opening 71b on the other side from a direction facing the tip of the shaft 11 and fixed thereto. Then, the shaft extension member 72 is fixed in a state where the tip of the shaft 11 and the tip of the shaft extension member 72 face each other with a gap g interposed therebetween. In this way, the shaft 11 and the shaft extension member 72 are electrically coupled to each other through the capacitance Ce.

Here, the shaft connection member 71 is formed of a dielectric material having a high dielectric constant, and the gap g is formed to be relatively thin. In this way, the capacitance Ce increases, and the impedance between the shaft 11 and the shaft extension member 72 decreases. Then, with respect to the common mode noise having a predetermined frequency component, the shaft extension member 72 and the shaft 11 can have substantially the same potential. Therefore, the shaft extension member 72 can be regarded as being electrically the same as the shaft 11.

Next, the structure of the capacitance forming member 30 and the positional relationship between the shaft extension member 72 and the capacitance forming member 30 will be described in more detail with reference to Fig. 10.

Fig. 10 shows the sectional structures of the shaft extension member 72 and the capacitance forming member 30 in the plane direction perpendicular to the rotational axis O.

As shown in Fig. 10, the shaft extension member 72 is formed in a columnar shape, and the cross section thereof has a circular shape centered on the rotational axis O.

Further, the facing member 30b of the capacitance forming member 30 is formed in a semicircular shape centered on the rotational axis O and has the arc-shaped facing surface α which faces the arc-shaped side surface β of the shaft 11 with a distance interposed therebetween.

Further, the bearing member 31 is formed in a circular shape centered on the rotational axis O, in the vicinity of the tip of the shaft extension member 72 and on the outside thereof. The bearing member 31 functions as a bearing for the shaft extension member 72 by being fixedly installed through the columnar member 30a. A side surface β' of the shaft extension member 72 and the facing surface α of the facing member 30b face each other with the bearing member 31 interposed therebetween.

In this embodiment, the length (a distance d3 shown in Fig. 8) of the facing member 30b in the direction of the rotational axis O is, for example, about 20 mm.

Further, in Fig. 10, an outer diameter r3 of the shaft extension member 72 is about 7 mm, and an inner diameter r4 of the facing member 30b is about 11 mm. Therefore, a distance Δd2 between the side surface β' and the facing surface α is about 2 mm.

Here, the bearing member 31 made of a dielectric material is present between the side surface β' and the facing surface α. If a relative permittivity ε of the bearing member 31 is 4, capacitance of about 3.89 pF is formed between the shaft extension member 72 and the capacitance forming member 30 due to the configuration described above.

Each of the dimensions described above is merely an example, and in another embodiments, the dimensions can be appropriately changed according to the internal configuration or the like of the indoor unit 1.

### (Operation and Effects)

As described above, according to the indoor unit 1 of the second embodiment, a dielectric material (the bearing member 31) is disposed between the facing surface α of the capacitance forming member 30 and the side surface β' of the shaft extension member 72.

In this way, it is possible to efficiently increase the stray capacitance between the shaft extension member 72 and the housing 1A.

Further, according to the indoor unit 1 of the second embodiment, the dielectric material (the bearing member 31) is formed in a circular shape centered on the rotational axis O on the outside of the shaft extension member 72, and formed so as to surround the shaft extension member 72 in the circumferential direction.

In this way, the capacitance forming member 30 not only increases the stray capacitance between the shaft extension member 72 and the housing 1A but also functions as a bearing for the shaft extension member 72. Accordingly, it is possible to suppress the oscillation of a rotary shaft of the shaft extension member 72.

Further, the shaft member related to the indoor unit 1 according to the second embodiment includes the shaft 11 of the fan motor 10, the shaft extension member 72 disposed so as to further extend from the tip of the shaft 11 in the extending direction of the shaft 11, and the shaft connection member 71 connecting the shaft 11 and the shaft extension member 72.

In this way, the shaft 11 is extended by the shaft extension member 72, whereby it is possible to rotate the plurality of fans 20 at once.

Further, according to the indoor unit 1 of the second embodiment, the shaft connection member 71 is made of a dielectric material, and the gap g is provided between the tip of the shaft 11 and the tip of the shaft extension member 72 (refer to Fig. 9). That is, the shaft 11 and the shaft extension member 72 described above are capacitively coupled to each other through the shaft connection member 71.

In this way, the capacitance Ce which is generated between the shaft 11 and the shaft extension member 72 increases. Then, since the shaft extension member 72 and the shaft 11 have approximately the same potential, the shaft voltage Vsh can also be reduced by forming capacitance between the shaft extension member 72 and the housing 1A.

The indoor units 1 according to the first and second embodiments have been described in detail above. However, specific aspects of the indoor unit 1 are not limited to those described above and various design changes or the like can be added within a scope which does not depart from the gist.

In the second embodiment, the shaft connection member 71 has been described as being made of a dielectric material. However, in another embodiment, there is no limitation to this aspect, and for example, the shaft connection member 71 may be made of a conductor material. Even in this case, it is possible to make the shaft extension member 72 and the shaft 11 have the same potential.

Further, in the first and second embodiments, the fan motor 10 has been described as an aspect having a single shaft 11 extending from the fan motor main body 10a to only one side. However, in another embodiment, there is no limitation to this aspect.

For example, the fan motor 10 may be a fan motor having both shafts extending in both directions so as to penetrate the fan motor main body 10a.

Several embodiments of the present invention have been described above. However, each of the embodiments described above is presented as an example and is not intended to limit the scope of the invention. Each of the embodiments described above can be implemented in various other forms, and various omissions, substitutions, or changes can be made within a scope which does not depart from the gist of the invention. Each of the embodiments described above and the modifications thereof shall be likewise included within the inventions stated in the claims and the equivalent scope thereof, if they are included in the scope or the gist of the invention.

### Industrial Applicability

According to the indoor unit, the air conditioner, and the method for manufacturing an indoor unit described above, electric corrosion of a bearing can be suppressed at low cost.

### Reference Signs List

1: indoor unit
1A: housing
10: fan motor
10a: fan motor main body
11: shaft (shaft member)
12: stator
13: rotor
14: bearing
14a: bearing inner ring
14b: bearing outer ring
14c: bearing ball
15: bracket
20: fan
30: capacitance forming member
30a: columnar member
30b: facing member
31: bearing member
40a, 40b: fixing member
60: substrate
71: shaft connection member
72: shaft extension member (shaft member)
M: permanent magnet
W: winding

## Claims

1. An indoor unit comprising:
a grounded housing;
a fan motor mounted on the housing; and
a capacitance forming member which is formed of a conductor material and has one end mounted on the housing and the other end having a facing surface which faces a surface of a shaft member with a distance interposed therebetween, the shaft member extending from a main body of the fan motor.

2. The indoor unit according to claim 1, wherein the facing surface of the capacitance forming member is formed such that capacitance between the housing and a bracket of the fan motor coincides with capacitance between the housing and the shaft member of the fan motor.

3. The indoor unit according to claim 1 or 2, wherein the facing surface of the capacitance forming member is formed such that a ratio of capacitance between a bracket and a negative direct-current line to capacitance between a winding neutral point and the bracket in the fan motor coincides with a ratio of capacitance between the shaft member and the negative direct-current line to capacitance between the winding neutral point and the shaft member.

4. The indoor unit according to any one of claims 1 to 3, wherein the facing surface of the capacitance forming member and the shaft member of the fan motor are formed concentrically to be centered on a rotational axis.

5. The indoor unit according to any one of claims 1 to 4, wherein a dielectric material is disposed between the facing surface of the capacitance forming member and the surface of the shaft member.

6. The indoor unit according to claim 5, wherein the dielectric material is formed so as to surround the shaft member in a circumferential direction.

7. The indoor unit according to any one of claims 1 to 6, wherein the shaft member includes
a shaft of the fan motor,
a shaft extension member disposed so as to further extend from a tip of the shaft in an extending direction of the shaft, and
a shaft connection member connecting the shaft and the shaft extension member.

8. The indoor unit according to claim 7, wherein the shaft and the shaft extension member are capacitively coupled to each other through the shaft connection member.

9. An air conditioner comprising:
the indoor unit according to any one of claims 1 to 8; and
an outdoor unit.

10. A method for manufacturing an indoor unit comprising:
a step of mounting a fan motor on a grounded housing of the indoor unit; and
a step of mounting one end of a capacitance forming member formed of a conductor material on the housing and disposing a facing surface provided at the other end so as to face a surface of a shaft member with a distance interposed therebetween, the shaft member extending from a main body of the fan motor.

## Amended claims

### Amended claims under Art. 19.1 PCT

1. (Amended) An indoor unit comprising:
a grounded housing;
a fan motor mounted on the housing and having a bracket which is not grounded; and
a capacitance forming member which is formed of a conductor material and has one end mounted on the housing and the other end having a facing surface which faces a surface of a shaft member with a distance interposed therebetween, the shaft member extending from a main body of the fan motor.

2. The indoor unit according to claim 1, wherein the facing surface of the capacitance forming member is formed such that capacitance between the housing and a bracket of the fan motor coincides with capacitance between the housing and the shaft member of the fan motor.

3. The indoor unit according to claim 1 or 2, wherein the facing surface of the capacitance forming member is formed such that a ratio of capacitance between a bracket and a negative direct-current line to capacitance between a winding neutral point and the bracket in the fan motor coincides with a ratio of capacitance between the shaft member and the negative direct-current line to capacitance between the winding neutral point and the shaft member.

4. The indoor unit according to any one of claims 1 to 3, wherein the facing surface of the capacitance forming member and the shaft member of the fan motor are formed concentrically to be centered on a rotational axis.

5. The indoor unit according to any one of claims 1 to 4, wherein a dielectric material is disposed between the facing surface of the capacitance forming member and the surface of the shaft member.

6. The indoor unit according to claim 5, wherein the dielectric material is formed so as to surround the shaft member in a circumferential direction.

7. The indoor unit according to any one of claims 1 to 6, wherein the shaft member includes
a shaft of the fan motor,
a shaft extension member disposed so as to further extend from a tip of the shaft in an extending direction of the shaft, and
a shaft connection member connecting the shaft and the shaft extension member.

8. The indoor unit according to claim 7, wherein the shaft and the shaft extension member are capacitively coupled to each other through the shaft connection member.

9. An air conditioner comprising:
the indoor unit according to any one of claims 1 to 8; and
an outdoor unit.

10. (Amended) A method for manufacturing an indoor unit comprising:
a step of mounting a fan motor on a grounded housing of the indoor unit such that a bracket is not grounded; and
a step of mounting one end of a capacitance forming member formed of a conductor material on the housing and disposing a facing surface provided at the other end so as to face a surface of a shaft member with a distance interposed therebetween, the shaft member extending from a main body of the fan motor.

Statement under Art. 19.1 PCT
In Claims 1 and 10 of the claims of this application, with respect to the fan motor which is one of the configurations, an amendment to apply a limitation to a feature that the bracket of the fan motor is not grounded was made. This amendment is an amendment based on the statement of Paragraph [0028] or the like in the specification of this application. Therefore, there is no addition of a new matter.
